(19) Europäisches Patentamt
European Patent Office
Office européen des brevets

(11) **EP 4 287 122 B1**

(12) **FASCICULE DE BREVET EUROPEEN**

(45) Date de publication et mention
de la délivrance du brevet:
**02.07.2025 Bulletin 2025/27**

(21) Numéro de dépôt: **23176117.2**

(22) Date de dépôt: **30.05.2023**

(51) Classification Internationale des Brevets (IPC):
**G06T 7/593** (2017.01)

(52) Classification Coopérative des Brevets (CPC):
**G06T 7/593;** G06T 2207/10021; G06T 2207/10032

(54) **PROCEDE DE GENERATION DE MODELE DE REPRESENTATION DE RELIEF PAR PHOTOGRAMMETRIE**

VERFAHREN ZUR ERZEUGUNG EINES RELIEFDARSTELLUNGSMODELLS MITTELS PHOTOGRAMMETRIE

METHOD FOR GENERATING A MODEL FOR REPRESENTING RELIEF BY PHOTOGRAMMETRY

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **02.06.2022 FR 2205303**

(43) Date de publication de la demande:
**06.12.2023 Bulletin 2023/49**

(73) Titulaire: **Airbus Defence and Space SAS**
**31402 Toulouse Cedex 4 (FR)**

(72) Inventeurs:
• **GARCIA, Emmanuel**
**78990 ELANCOURT (FR)**
• **NONIN, Philippe**
**78990 ELANCOURT (FR)**

(74) Mandataire: **Cabinet Le Guen Maillet**
**3, impasse de la Vigie**
**CS 71840**
**35418 Saint-Malo Cedex (FR)**

(56) Documents cités:
• **RUANO SUSANA ET AL: "Aerial video georegistration using terrain models from dense and coherent stereo matching",** PROCEEDINGS OF SPIE, IEEE, US, vol. 9089, 18 June 2014 (2014-06-18), pages 90890V - 90890V, XP060037330, ISBN: 978-1-62841-730-2, DOI: 10.1117/12.2053034
• **ROSSI MATTIA ET AL: "Joint Graph-Based Depth Refinement and Normal Estimation",** 2020 IEEE/ CVF CONFERENCE ON COMPUTER VISION AND PATTERN RECOGNITION (CVPR), IEEE, 13 June 2020 (2020-06-13), pages 12151 - 12160, XP033805014, DOI: 10.1109/ CVPR42600.2020.01217
• **SHEN MIN-YI ET AL: "Vision based terrain reconstruction for planet rover using a special binocular bundle adjustment",** JOURNAL OF ZHEJIANG UNIVERSITY SCIENCE A, ZHEIJIANG UNIVERSITY PRESS, CN, vol. 9, no. 10, 1 October 2008 (2008-10-01), pages 1341 - 1350, XP036053128, ISSN: 1673-565X, [retrieved on 20081001], DOI: 10.1631/JZUS.A0720057

**Description**

DOMAINE TECHNIQUE

La présente invention concerne le domaine de la génération de modèles de représentation de relief par photogrammétrie.

ETAT DE LA TECHNIQUE ANTERIEURE

La génération de modèle de représentation de relief, tel qu'un modèle numérique de surface (MNS) ou un modèle numérique d'élévation (MNE), par photogrammétrie consiste à reconstituer une scène en trois dimensions (3D) en utilisant la parallaxe obtenue entre des images stéréo, par exemple acquises par satellite, de la scène. La photogrammétrie s'inspire de la vision stéréoscopique humaine pour reconstituer le relief de la scène à partir de la différence de points de vue offerte par les images stéréo. Pour ce faire, des calculs de corrélation entre les images stéréo sont effectués et exploités pour reconstituer la scène.

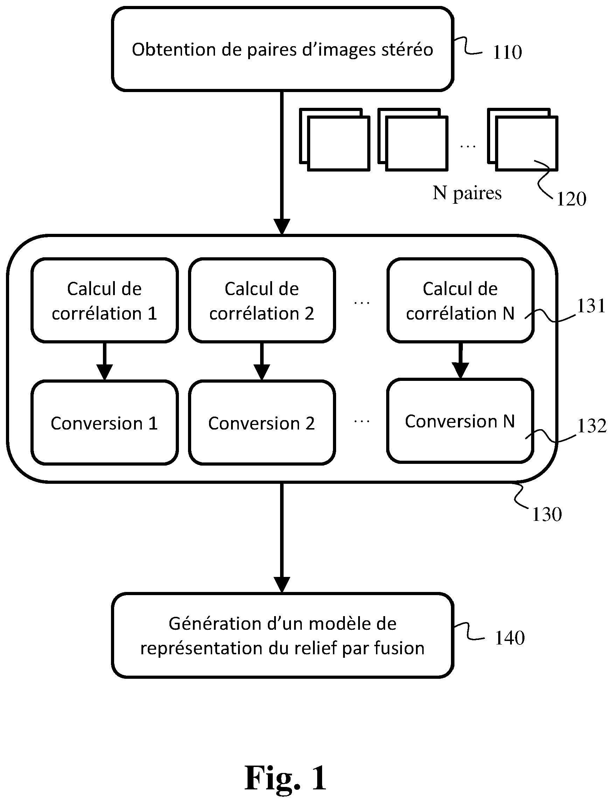

Une technique habituelle de génération de modèle de représentation de relief est schématiquement représentée sur la **Fig. 1.**

Dans une étape 110, un système informatique obtient une pluralité de paires d'image stéréo de la scène, constituant ainsi un ensemble de N paires d'images stéréo 120 couvrant une région d'intérêt ROI (« Region Of Interest » en anglais) ou une aire d'intérêt AOI (« Area of Interest » en anglais).

Dans une étape 130, le système informatique génère une pluralité de modèles de représentation de relief unitaires, chacun obtenu grâce à une dite paire d'images stéréo 120. Pour chacune des N paires d'images stéréo, l'étape 130 comporte une première sous-étape 131 de calcul de corrélation entre les images stéréo de ladite paire, suivie d'une sous-étape 132 de conversion des résultats de corrélation en modèles de représentation de relief unitaires. N modèles de représentation de relief unitaires sont ainsi obtenus, indépendamment les uns des autres, en exploitant en parallèle (ou séquentiellement) chacune des N paires d'images stéréo.

Ensuite, dans une étape 140, le système informatique fusionne les N modèles de représentation de relief unitaires afin de former un modèle de représentation de relief fini de la région d'intérêt ROI ou de l'aire d'intérêt AOI.

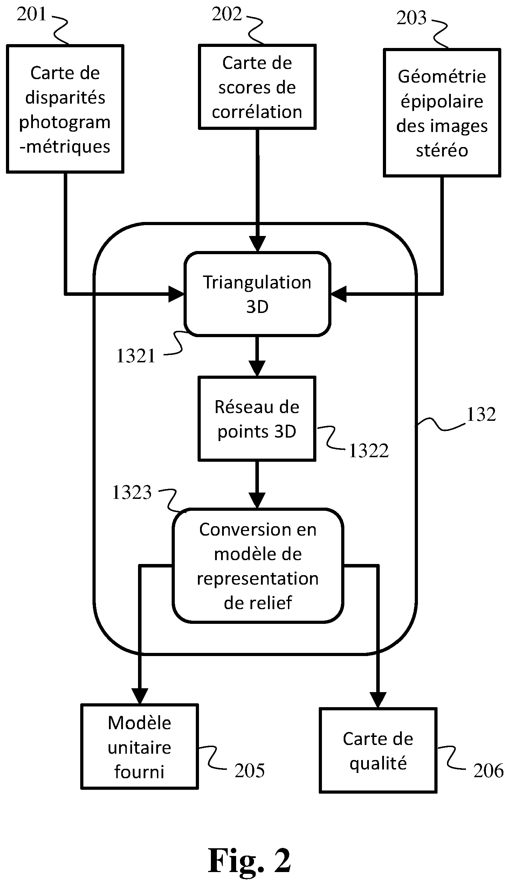

De manière un peu plus détaillée, tel qu'illustré sur la **Fig. 2,** l'étape 132 de conversion des résultats de corrélation en modèles de représentation de relief unitaires est réalisée, pour chacune des N paires d'images stéréo, grâce à une étape 1321 de triangulation en 3D réalisée à partir d'une carte de disparités photogrammétriques 201, d'une carte de scores de corrélation 202, et d'une géométrie épipolaire des images stéréo 203. La géométrie épipolaire des images stéréo 203 fournit une information de correspondance entre points de relief et pixels d'images épipolaires. La carte de disparités photogrammétriques 201, la carte de scores de corrélation 202, et la géométrie épipolaire des images stéréo 203 sont obtenues par exécution de l'étape 131 de calcul de corrélation pour la paire d'images stéréo considérée.

L'étape 1321 de triangulation en 3D permet d'obtenir, pour la paire d'images stéréo considérée, un réseau de points en 3D 1322, qui est ensuite converti, dans une étape 1323, en un modèle de représentation de relief. Un modèle de représentation de relief unitaire 205 et une carte de qualité 206 sont ainsi obtenus en sortie de l'étape 132, et ce, pour chacune des N paires d'images stéréo. Les modèles de représentation de relief unitaires 205, accompagnés de leurs cartes de qualité 206 respectives, sont alors fusionnés afin de former le modèle de représentation de relief fini correspondant à la région d'intérêt ROI ou à l'aire d'intérêt AOI.

Un inconvénient de l'approche exposée ci-dessus réside dans la perte d'information liée à la conversion des résultats de corrélations unitaires (i.e., par paire d'images stéréo) en modèles de représentation de relief unitaires, et à la fusion ultérieure de ces modèles de représentation de relief unitaires pour former le modèle de représentation de relief fini. En effet, un modèle de représentation de relief ne peut pas capturer toute l'information présente dans un résultat de corrélation. Un exemple typique est que des structures de terrain en surplomb ne peuvent pas être représentées dans un modèle numérique d'élévation, alors que ces structures de terrain en surplomb peuvent l'être dans le résultat de corrélation. Un autre exemple est que le modèle de représentation de relief est échantillonné sur une certaine grille, qui est distincte de la grille sur laquelle est effectué le calcul de corrélation ; le passage d'une grille à l'autre implique un rééchantillonnage qui dégrade nécessairement l'information.

Il est alors souhaitable de pallier au moins cet inconvénient de l'état de la technique antérieure, et ce, de manière simple, efficace et peu coûteuse. Il est notamment souhaitable de fournir une solution qui limite la perte d'information dans la génération d'un modèle de représentation de relief par photogrammétrie.

L'article "Aerial video georegistration using terrain models from dense and coherent stereo matching" par Ruano et al., 2014, présente une méthode pour surmonter les limitations des modèles de terrain existants, en proposant une méthode basée sur les disparités et les méthodes variationnelles pour produire des MNT denses et précis.

EXPOSE DE L'INVENTION

A cet effet, il est proposé un procédé de génération d'un modèle de représentation de relief à partir d'une pluralité de N paires d'images stéréo, chacune des N paires d'images stéréo étant associée à une carte de disparités photogrammétriques qui est obtenue par calcul de corrélation à partir de la paire d'images stéréo en question, le procédé étant caractérisé en ce qu'il comporte les étapes itératives suivantes : calcul de cartes de disparités géométriques à partir d'un modèle de représentation de relief prédéterminé, par projection du modèle de représentation de relief prédéterminé dans une géométrie épipolaire des paires d'images stéréo ; calcul d'une fonction de coût, représentative d'une différence entre les disparités géométriques et photogrammétriques, associée au modèle de représentation de relief prédéterminé ; et mise à jour du modèle de représentation de relief prédéterminé par optimisation de type descente de gradient de la fonction de coût, et réitération jusqu'à atteinte d'un critère d'arrêt prédéfini.

Ainsi, grâce au calcul de la fonction de coût comparant les disparités géométriques et photogrammétriques, le modèle de représentation de relief converge vers une solution qui limite la perte d'information en évitant d'avoir recours à une conversion des résultats de corrélations unitaires. En effet, le procédé confronte ainsi le modèle de représentation de relief avec l'ensemble des N paires d'images stéréo au lieu de procéder par paire d'images stéréo.

Dans un mode de réalisation particulier, la fonction de coût *FC* est exprimée ainsi :

$$FC = \sum_k \sum_{(i,j)} W_{k,0}(i,j) N_m(D_k(i,j) - D_{k,0}(i,j))$$

où *k* est un indice de parcours des N paires d'images stéréo, $N_m$ est une fonction de normalisation, $D_k(i,j)$ est la valeur de disparité pour le pixel *(i,j)* dans la carte de disparités géométriques associée à la paire d'images stéréo pointée par la valeur de l'indice *k*, et $D_{k,0}(i,j)$ est la valeur de disparité pour le pixel *(i,j)* dans la carte de disparités photogrammétriques associée à la paire d'images stéréo pointée par la valeur de l'indice *k*, et $W_{k,0}(i,j)$ est la valeur correspondante pour le pixel *(i,j)* dans une carte de scores de corrélation associée, à l'issue du calcul de corrélation , à ladite carte de disparités photogrammétriques associée à la paire d'images stéréo pointée par la valeur de l'indice *k*.

Dans un mode de réalisation particulier, la fonction de normalisation $N_m$ est la pseudo-norme de Huber ainsi appliquée :

$$N_m(x) = \begin{cases} |x| - \dfrac{1}{2}, & |x| \geq 1 \\ \dfrac{x^2}{2}, & |x| < 1 \end{cases}$$

Dans un mode de réalisation particulier, la fonction de coût *FC* est ajustée avec un terme R de régularisation du modèle de représentation de relief, de telle sorte que :

$$FCA = \lambda.R + FC = \lambda.R + \sum_k \sum_{(i,j)} W_{k,0}(i,j) N_m(D_k(i,j) - D_{k,0}(i,j))$$

où $\lambda$ est un facteur de pondération de régularisation du modèle de représentation de relief et *FCA* est la fonction de coût ajustée.

Dans un mode de réalisation particulier, le terme *R* de régularisation du modèle de représentation de relief est la variation totale du modèle de représentation de relief, ou sa variante Huber-TV, laquelle est normalisée par un pas de grille du modèle de représentation de relief.

Dans un mode de réalisation particulier, la projection du modèle de représentation de relief prédéterminé dans la géométrie épipolaire des paires d'images stéréo, appelée ici géométrie épipolaire initiale, est effectuée dans une géométrie épipolaire sur-échantillonnée, et le résultat de la projection est ensuite sous-échantillonné dans la géométrie épipolaire initiale.

Dans un mode de réalisation particulier, le résultat de la projection est ensuite sous-échantillonné dans la géométrie épipolaire initiale à l'aide d'un noyau de convolution bilinéaire réalisant un filtrage passe-bas.

Dans un mode de réalisation particulier, le modèle de représentation de relief est un modèle numérique d'élévation.

Il est aussi proposé un produit programme d'ordinateur comportant des instructions pour implémenter le procédé selon l'un quelconque des modes de réalisation présentés ci-dessus, lorsque lesdites instructions sont exécutées par un processeur. Il est aussi proposé un support de stockage d'informations (non transitoire) stockant un programme d'ordinateur comportant des instructions pour implémenter le procédé selon l'un quelconque des modes de réalisation présentés ci-dessus, lorsque lesdites instructions sont lues depuis le support de stockage d'informations et exécutées par un processeur.

Il est aussi proposé un système de génération d'un modèle de représentation de relief à partir d'une pluralité de N paires d'images stéréo, chacune des N paires d'images stéréo étant associée à une carte de disparités photogrammétriques qui est obtenue par calcul de corrélation à partir de la paire d'images stéréo en question, le système comportant de la circuiterie électronique configurée pour implémenter les étapes itératives suivantes : calcul de cartes de disparités géométriques à partir d'un modèle de représentation de relief prédéterminé, par projection du modèle de représentation de relief prédéterminé dans une géométrie épipolaire des paires d'images stéréo ; calcul d'une fonction de coût, représentative d'une différence entre les disparités géométriques et photogrammétriques, associée au modèle de représentation de relief prédéterminé ; et mise à jour du modèle de représentation de relief prédéterminé par optimisation de type descente de gradient de la fonction de coût, et réitération jusqu'à atteinte d'un critère d'arrêt prédéfini.

BREVE DESCRIPTION DES DESSINS

La description suivante d'au moins un mode de réalisation est établie en relation avec les dessins joints, parmi lesquels :

[Fig. 1] illustre schématiquement un organigramme d'un algorithme de génération de modèle de représentation de relief pour une région d'intérêt ou une aire d'intérêt, connu de l'état de la technique ;
[Fig. 2] illustre schématiquement un organigramme d'un algorithme de conversion des résultats de corrélation en modèles de représentation de relief unitaires, connu de l'état de la technique ;
[Fig. 3] illustre schématiquement un organigramme d'un algorithme de génération de modèle de représentation de relief pour une région d'intérêt ou une aire d'intérêt, dans un mode de réalisation de la présente invention ;
[Fig. 4] illustre schématiquement un exemple d'architecture matérielle d'un système informatique permettant l'implémentation de l'algorithme de la Fig. 3 ;
[Fig. 5] illustre schématiquement un organigramme d'un exemple d'algorithme de calcul de corrélation ; et
[Fig. 6] illustre schématiquement un organigramme d'un algorithme de génération d'un modèle de représentation du relief par itérations, directement à partir de résultats de corrélation unitaires, dans un mode de réalisation de la présente invention.

EXPOSE DETAILLE DE MODES DE REALISATION

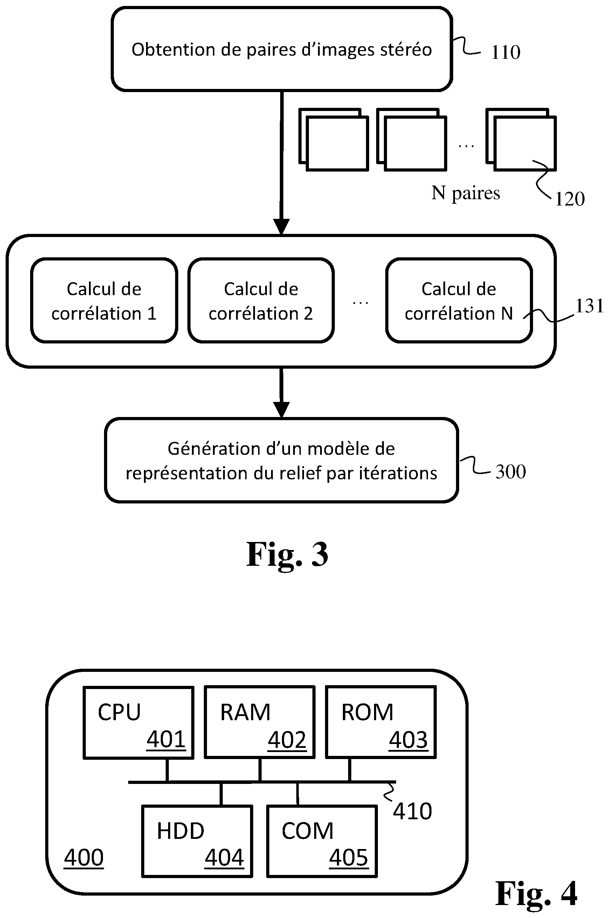

La **Fig. 3** illustre schématiquement un organigramme d'un algorithme de génération de modèle de représentation de relief, dans un mode de réalisation de la présente invention.

La Fig. 3 reprend l'étape 110, dans laquelle un système informatique obtient une pluralité de paires d'image stéréo de la scène, constituant ainsi un ensemble de N paires d'images stéréo 120 couvrant une région d'intérêt ROI ou une aire d'intérêt AOI.

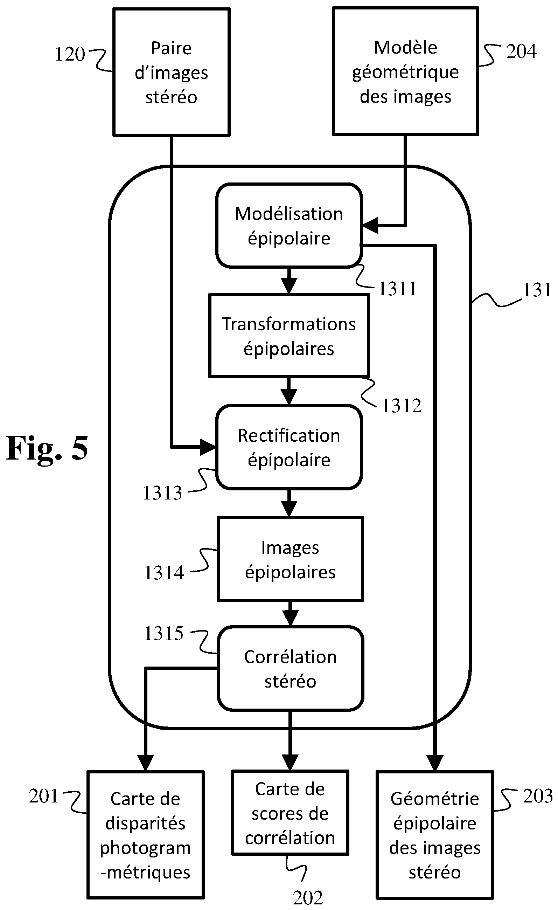

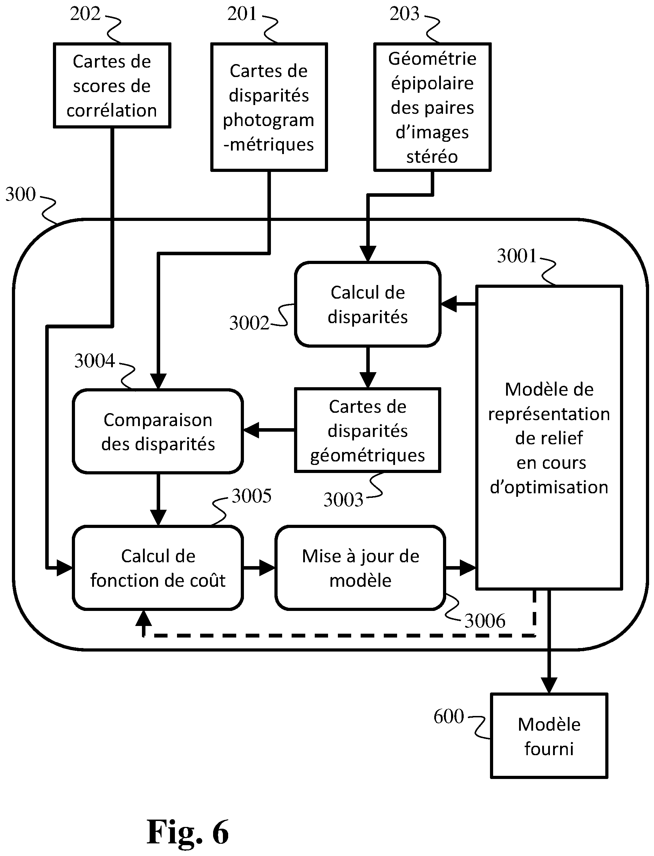

La Fig. 3 reprend aussi, pour chacune des N paires d'images stéréo, l'étape 131 de calcul de corrélation entre les images stéréo de ladite paire d'images stéréo. Un mode de réalisation particulier est détaillé ci-après en relation avec la Fig. 5. A la suite de l'étape 131, l'algorithme de la Fig. 3 diffère de celui de la Fig. 1, comme détaillé ci-après, en relation particulièrement avec la Fig. 6.

Ainsi, suite à l'étape 131, le système informatique effectue une étape 300 de génération d'un modèle de représentation du relief par itérations, afin de former le modèle de représentation du relief fini de la région d'intérêt ROI ou de l'aire d'intérêt AOI directement à partir de l'ensemble des résultats de corrélation unitaires. L'algorithme de la Fig. 3 évite ainsi la conversion en modèles de représentation de relief unitaires et de devoir fusionner N modèles de représentation de relief unitaires, ce qui limite la perte d'information.

Le modèle de représentation du relief ainsi obtenu par itérations peut être un modèle numérique de surface (MNS), ou un modèle numérique d'élévation (MNE), ou un maillage triangulaire.

La **Fig. 4** illustre schématiquement un exemple d'architecture matérielle 400 de système informatique permettant d'exécuter l'algorithme décrit ci-dessus en relation avec la Fig. 3.

Le système informatique comprend alors, reliés par un bus de communication 410 : un processeur ou CPU (pour « Central Processing Unit » en anglais) 401, ou une grappe de tels processeurs, comme par exemple des GPU (« Graphics Processing Units » en anglais) ; une mémoire vive RAM (pour « Random Access Memory » en anglais) 402 ; une mémoire morte ROM (pour « Read Only Memory » en anglais) 403, ou une mémoire réinscriptible de type EEPROM (« Electrically Erasable Programmable ROM » en anglais), par exemple de type Flash ; un dispositif de stockage de données, tel qu'un disque dur HDD (pour « Hard Disk Drive » en anglais) 404, ou un lecteur de support de stockage, tel qu'un lecteur de cartes SD (pour « Secure Digital » en anglais) ; un ensemble d'interfaces d'entrées et/ou sorties, telles que des interfaces de communication 405, permettant notamment au système informatique d'interagir avec d'autres équipements.

Le processeur 401 est capable d'exécuter des instructions chargées dans la RAM 402 à partir de la ROM 403, d'une mémoire externe (non représentée), d'un support de stockage, tel qu'une carte SD ou le disque dur HDD 404, ou d'un réseau de communication. Lorsque le système informatique est mis sous tension, le processeur 401 est capable de lire de la RAM 402 des instructions et de les exécuter. Ces instructions forment un programme d'ordinateur causant l'implémentation, par le processeur 401, des étapes, comportements et algorithmes décrits ici.

Tout ou partie des étapes, comportements et algorithmes décrit ici peut ainsi être implémenté sous forme logicielle par exécution d'un ensemble d'instructions par une machine programmable, telle qu'un DSP (« Digital Signal Processor » en anglais) ou un processeur, ou être implémenté sous forme matérielle par une machine ou un composant (« chip » en anglais) dédié ou un ensemble de composants dédié (« chipset » en anglais), tel qu'un FPGA (pour « Field-Programmable Gate Array » en anglais) ou un ASIC (pour « Application-Specific Integrated Circuit » en anglais).

D'une manière générale, le système informatique comprend donc de la circuiterie électronique agencée et configurée pour implémenter les étapes, comportements et algorithmes décrits ici.

La **Fig. 5** illustre schématiquement un organigramme d'un exemple d'algorithme de calcul de corrélation, correspondant à un mode de réalisation particulier de l'étape 131.

Dans une étape 1311, le système informatique effectue une modélisation épipolaire à partir d'un modèle géométrique 204 des images de la paire d'images stéréo considérée. Le modèle géométrique 204 de chaque image fournit une correspondance entre des coordonnées de points de relief *(X, Y, Z)* et des coordonnées pixel *(x, y)* correspondantes auxquelles ce point de relief est vu dans l'image en question. Chaque image considérée possède ainsi son propre modèle géométrique 204.

A l'issue de l'étape 1311, le système informatique obtient des transformations épipolaires 1312 des images. La transformation épipolaire 1312 est l'expression d'une fonction de transformation 2D de chaque image (c'est-à-dire un objet mathématique), sachant qu'une même image peut induire plusieurs transformations épipolaires si cette image participe à plusieurs paires d'images stéréo, chaque transformation épipolaire (fonction) étant alors à considérer dans le contexte de la paire d'images stéréo dans laquelle l'image est considérée. La combinaison d'une transformation épipolaire d'image (correspondance entre (x, y), qui sont les points dans l'image considérée de la paire d'images stéréo en question, et (x', y'), qui sont les points correspondants dans l'image épipolaire suite à la transformation 2D correspondante) et le modèle géométrique 204 de cette image (correspondance entre (X, Y, Z) et (x, y)) définit la géométrie épipolaire 203 de cette image (correspondance entre (X, Y, Z) et (x', y'), c'est-à-dire la correspondance entre un point de relief et un pixel d'image épipolaire). Dit autrement, la géométrie épipolaire 203 pour une image est une combinaison du modèle géométrique 204 et de la transformation épipolaire 1312 pour cette image (dans le contexte de la paire d'images stéréo considérée).

A partir des transformations épipolaires 1312 et de la paire d'images stéréo considérée 120, le système informatique effectue une rectification épipolaire 1313 des images stéréo considérées. Les images stéréo considérées sont ainsi rééchantillonnées dans la géométrie épipolaire, afin d'obtenir des images épipolaires 1314.

Et dans une étape 1315, le système informatique effectue une corrélation stéréo à partir des images épipolaires 1314, pour produire une carte de disparité 201 et optionnellement une carte de scores de corrélation associée 202. Le système informatique applique par exemple, comme méthode de corrélation stéréo en géométrie épipolaire : corrélation ligne par ligne par programmation dynamique, mise en correspondance semi-globale (« semi-global matching » en anglais, ou mise en correspondance par réseau de neurones (« neural network matching » en anglais).

La corrélation en géométrie épipolaire est typiquement utilisée notamment pour des raisons d'efficacité du calcul de corrélation. En variante d'un calcul de corrélation en géométrie épipolaire, le système informatique peut utiliser une méthode de corrélation directement à partir des images stéréo, et produire des informations de profondeur équivalentes à une carte de disparité.

A noter que la géométrie épipolaire n'est rigoureusement définie que dans le cas où les images initiales ont une modélisation géométrique de type « pinhole » (i.e., un centre de projection unique pour toute l'image). Cette condition n'est typiquement pas respectée dans le cas des images satellite dont la modélisation géométrique est de type « push-broom » (i.e., le centre de projection se déplace le long de la trajectoire du satellite pendant l'acquisition des images). Dans ce cas, une géométrie pseudo-épipolaire est définie, mais qui vérifie localement les conditions d'une vraie géométrie épipolaire (i.e., un point 3D se projette sur la même ligne horizontale dans les deux images). Il est ainsi considéré que la géométrie est également épipolaire dans le cas des images satellite.

La **Fig. 6** illustre schématiquement un organigramme d'un algorithme de génération d'un modèle 600 de représentation du relief par itérations, directement à partir de résultats de corrélation unitaires, dans un mode de réalisation de la présente invention. La Fig. 6 détaille l'étape 300 susmentionnée.

Dans une étape 3002, le système informatique effectue un calcul de disparités à partir d'un modèle de représentation de relief en cours d'optimisation 3001. Le système informatique utilise pour ce faire la géométrie épipolaire des paires d'images stéréo 203. Le modèle de représentation de relief en cours d'optimisation 3001 est le modèle de représentation de relief qui est construit de manière itérative. Pour la toute première itération, ce modèle de représentation de relief 3001 peut être chargé avec un modèle préétabli, par exemple obtenu grâce à une base de données en accès libre (« open source » en anglais). En variante, ce modèle de représentation de relief 3001 peut être chargé avec un modèle plan (e.g. un modèle d'élévation constant). Dans une autre variante, ce modèle de représentation de relief 3001 peut être chargé avec un modèle de représentation de relief obtenu par une autre méthode, par exemple en appliquant l'approche décrite ci-avant en relation avec les Figs. 1 et 2. Ainsi, le modèle de représentation de relief obtenu par l'approche décrite ci-avant en relation avec les Figs. 1 et 2 est amélioré grâce à la présente invention.

La disparité induite par le modèle de représentation de relief 3001 en cours d'optimisation dans une géométrie stéréo donnée est calculée en effectuant une projection du modèle de représentation de relief 3001 dans la géométrie épipolaire de chaque paire d'images stéréo 203, et pour chaque point d'une image épipolaire primaire qui est également visible dans une image épipolaire secondaire, la différence de coordonnées est calculée, ce qui donne une valeur de disparité en ce point.

Selon un mode de réalisation, la projection est effectuée en décomposant le modèle de représentation de relief 3001 en triangles élémentaires (si le modèle de représentation de relief 3001 ne l'est pas déjà), lesquels sont rastérisés dans la géométrie cible à laquelle est associé un tampon de profondeur (appelé « Z-buffer ») pour calculer des occlusions, c'est à dire, lorsque deux ou plusieurs triangles élémentaires se projettent en un même pixel de la géométrie cible, déterminer quel triangle est au-dessus des autres et est donc visible. Un tampon de profondeur (ou « Z-buffer ») est un tampon mémoire gérant la visibilité des éléments pour une visualisation en 2 dimensions d'un environnement en 3 dimensions.

Dans un mode de réalisation particulier, afin d'éviter des problèmes de crénelage (« aliasing » en anglais) lors de la projection lorsque la géométrie épipolaire est moins résolue que le modèle de représentation de relief 3001, la projection est effectuée dans une géométrie épipolaire sur-échantillonnée, et le résultat est ensuite sous-échantillonné dans la géométrie épipolaire initiale, par exemple à l'aide d'un noyau de convolution bilinéaire pour effectuer un filtrage passe-bas et ainsi supprimer des hautes fréquences indésirables liées au sur-échantillonnage.

Ainsi, si le facteur de sous-échantillonnage est $k$, et l'image à filtrer est $I(x,y)$, l'image filtrée sous-échantillonnée $S(x, y)$ est définie, par exemple, par

$$S(x, y) = \frac{1}{C} \sum_{i=-(k-1)}^{(k-1)} \sum_{j=-(k-1)}^{(k-1)} K(i,j) I(kx + i, ky + j)$$

avec

$$K(i,j) = \left| \frac{i}{k} \right| \left| \frac{j}{k} \right|$$

ou bien

$$K(i,j) = |ij|$$

et

$$C = \sum_{i=-(k-1)}^{(k-1)} \sum_{j=-(k-1)}^{(k-1)} K(i,j)$$

A l'issue de l'étape 3002, des cartes de disparités géométriques 3003 sont obtenues. Ces cartes de disparités sont dites « géométriques » car elles sont obtenues à partir du modèle de représentation de relief 3001 en cours d'optimisation, par opposition aux cartes de disparités photogrammétriques 201 qui sont, elles, obtenues à partir de chacune des N paires d'images stéréo 120 par le biais de l'étape 131.

Etant donné un modèle de représentation de relief (tel qu'un modèle numérique d'élévation MNE) et deux images épipolaires d'une paire stéréo, la disparité géométrique induite par le modèle de représentation de relief dans cette géométrie épipolaire est ainsi calculée par le système informatique. Ainsi, pour chaque pixel $(x,y)$ d'une des deux images épipolaires, appelée « image épipolaire primaire », qui voit un certain point $(X, Y, Z)$ du modèle de représentation de relief, le système informatique détermine quel pixel $(x+d,y)$ de l'autre image épipolaire, appelée « image épipolaire secondaire », s'il existe, voit le même point (X,Y,Z) du modèle de représentation de relief. La valeur de d ainsi obtenue par le système informatique est la valeur de disparité géométrique associée au pixel (x,y) de l'image épipolaire primaire. Dans cette approche, le système informatique tient compte des cas où certaines zones du modèle de représentation de relief ne sont visibles que dans une des deux images épipolaires à cause d'occlusions par d'autres éléments de relief.

Dans un mode de réalisation particulier, pour un gain en efficacité de traitement, le système informatique transforme le modèle de représentation de relief 3001 en un maillage triangulaire, ce qui définit une surface continue et planaire par morceaux. Chaque quadruplet de pixels voisins est ainsi découpé en quatre triangles 3D (avec donc prise en compte des informations d'élévation desdits pixels voisins) autour du centroïde desdits pixels voisins. A partir de la représentation en maillage triangulaire, le calcul de disparité géométrique est effectué triangle 3D par triangle 3D par le système informatique. Pour chaque triangle 3D, le système informatique calcule sa projection dans l'image épipolaire primaire, puis le système informatique parcourt chaque pixel de l'image épipolaire primaire contenu à l'intérieur de ce triangle 3D. Chacun de ces pixels, de coordonnées (x,y), correspond à un point (X, Y,Z) du triangle 3D, et ce point est projeté dans l'image épipolaire secondaire, aux coordonnées (x',y). Le fait que le système informatique opère en géométrie épipolaire entraîne que la coordonnée y soit la même dans les deux images épipolaires.

Si le point (X, Y,Z) est effectivement visible au point (x',y) de l'image épipolaire secondaire, la disparité au pixel (x,y) de l'image épipolaire primaire est alors calculée comme d = x' - x. Comme déjà indiqué, il se peut que le point (X, Y,Z) se projette en (x',y) dans l'image épipolaire secondaire, mais n'y soit pas visible s'il est caché par au moins un autre triangle 3D qui se trouve devant à cause des élévations correspondantes. Le système informatique réalise donc un test de visibilité du point (X, Y, Z) aux coordonnées (x', y) de l'image épipolaire secondaire. Ceci est réalisé en calculant, au préalable de tout calcul de disparité, quel point du modèle de représentation de relief 3001 est visible en chaque pixel de l'image épipolaire secondaire. Spécifiquement, le système informatique calcule et stocke, en association de chaque pixel de l'image épipolaire secondaire, l'altitude du point 3D qui est visible en ce pixel grâce à un tampon de profondeur (« Z-buffer »). Le système informatique peut alors tester la visibilité du point (X,Y,Z) au point (x',y) de l'image épipolaire secondaire en comparant la valeur en Z du point (X,Y,Z) avec la valeur du tampon de profondeur (« Z-buffer ») au point (x',y) de l'image épipolaire secondaire. Si ces deux valeurs coïncident, alors le point est visible, et si la valeur en Z du point (X,Y,Z) est inférieure à la valeur en (x',y) dans le tampon de profondeur (« Z-buffer »), alors le point (X,Y,Z) n'est pas visible dans l'image épipolaire secondaire.

Etant donné que le point (x',y) de l'image épipolaire secondaire en lequel se projette le point (X, Y,Z) n'a pas nécessairement une coordonnée x' entière (« integer » en anglais), le système informatique effectue une interpolation aux plus proches voisins, du contenu du tampon de profondeur (« Z-buffer ») en la coordonnée x'. Puis, le système informatique effectue une comparaison de la valeur en Z du point (X,Y,Z) avec la valeur du tampon de profondeur (« Z-buffer ») au point (x',y) de l'image épipolaire secondaire avec une tolérance prédéterminée (par exemple, une tolérance fixe prédéfinie), laquelle est choisie comme étant égale au pas de la grille du modèle de représentation de relief 3001.

En complément, pour tester la visibilité dans l'image épipolaire primaire, le système informatique met à jour, au cours du parcours des triangles 3D, un tampon de profondeur (« Z-buffer ») associé à l'image épipolaire primaire, et si un triangle 3D se projette en un pixel (x,y) de l'image épipolaire primaire pour lequel une disparité avait déjà été calculée grâce à un autre triangle 3D, le système informatique détermine si le triangle 3D nouvellement considéré est au-dessus du triangle 3D précédemment considéré. Si tel est le cas, alors le système informatique met à jour la disparité au pixel (x,y) avec celle calculée par le triangle 3D nouvellement considéré ; sinon, le système informatique conserve la disparité calculée avec le triangle 3D précédemment considéré.

Dans une étape 3004, le système informatique effectue une comparaison des cartes de disparités géométriques 3003 avec les cartes de disparités photogrammétriques 201. La comparaison est effectuée point à point, c'est-à-dire par pixel, dans les cartes de disparités.

Dans une étape 3005, le système informatique calcule une fonction de coût, représentative d'une différence entre les disparités géométriques et photogrammétriques, associée au modèle de représentation de relief 3001.

La fonction de coût $FC$ est constituée autour d'une fonction de normalisation $N_m$ appliquée à chaque différence ponctuelle issue de la comparaison et sommée sur l'ensemble des pixels de disparité et sur l'ensemble des paires d'images stéréo. Par exemple, le paramètre entre la partie quadratique et la partie linéaire de la pseudo-norme de Huber est choisi égal à un pixel de disparité. Le résultat de la pseudo-norme de Huber est préférentiellement multiplié point à point pour chaque paire d'images stéréo par la valeur de score de corrélation correspondante fournie dans les cartes de scores de corrélation 202.

Dans un mode de réalisation particulier, si $D_k(i,j)$ est la valeur pour le pixel (i,j) de disparité dans la carte de disparités géométriques 3003 associée à la paire d'images stéréo pointée par la valeur d'un indice k, et $D_{k,0}(i,j)$ est la valeur pour le pixel (i,j) de disparité dans la carte de disparités photogrammétriques associée à la paire d'images stéréo pointée par la valeur de l'indice k, et $W_{k,0}(i,j)$ est la valeur correspondante pour le pixel (i,j) dans la carte de scores de corrélation correspondante, la fonction de coût $FC$ associée est exprimée ainsi :

$$FC = \sum_{k} \sum_{(i,j)} W_{k,0}(i,j) N_m(D_k(i,j) - D_{k,0}(i,j))$$

où $k$ est un indice de parcours des N paires d'images stéréo ($k$= 1, .., N), c'est-à-dire que la valeur de $k$ représente la paire d'images stéréo à laquelle la carte de disparités photogrammétriques considérée est associée.

Par exemple, la fonction de normalisation $N_m$ est :

- La norme L1 (valeur absolue) : $N_m(x) = |x|$
- La norme L2 : $N_m(x) = x^2$

Dans un mode de réalisation préféré, la fonction de normalisation $N_m$ est :

- La pseudo-norme de Huber :

$$N_m(x) = \begin{cases} |x| - \frac{1}{2}, & |x| \geq 1 \\ \frac{x^2}{2}, & |x| < 1 \end{cases}$$

Dans un mode de réalisation particulier (symbolisé sur la Fig. 6 par la flèche de retour en pointillés depuis le modèle de représentation de relief 3001 vers l'étape 3005 de calcul de la fonction de coût), le système informatique ajuste cette fonction de coût, représentative de la différence entre les disparités géométriques et photogrammétriques, avec un terme $R$ de régularisation du modèle de représentation de relief 3001. Ainsi, la fonction de coût ajustée $FCA$ peut être exprimée comme suit :

$$FCA = \lambda.R + FC = \lambda.R + \sum_{k} \sum_{(i,j)} W_{k,0}(i,j) N_m(D_k(i,j) - D_{k,0}(i,j))$$

où $\lambda$ est un facteur de pondération de la régularisation du modèle de représentation de relief 3001 dans le résultat de la fonction de coût.

Le facteur de pondération $\lambda$ dépend du contexte d'utilisation du modèle de représentation de relief 3001 généré et est typiquement défini par des tests en laboratoire.

Le terme R de régularisation du modèle de représentation de relief 3001 est la variation totale du modèle de représentation de relief 3001, ou sa variante Huber-TV (pour « Huber Total Variation »), laquelle est normalisée par le pas de grille du modèle de représentation de relief 3001 de sorte à avoir une mesure sans unité physique, et donc homogène avec le terme de coût de somme de différence de disparité.

Dans le cas où le modèle de représentation de relief 3001 est un modèle numérique d'élévation MNE, le terme $R$ de régulation du modèle de représentation de relief 3001 est préférentiellement la variante de la variation totale, appelée Huber-TV. D'autres types de régulation peuvent être utilisés lorsque le modèle de représentation de relief 3001 est un modèle numérique d'un autre type, tel qu'un modèle numérique de surface MNS.

Dans une étape 3006, le système informatique effectue une mise à jour du modèle de représentation de relief 3001. La fonction de coût ayant une définition analytique précise, le système informatique est capable d'en calculer des dérivées formelles par rapport aux variables du problème que sont les valeurs de relief des pixels du modèle de représentation de relief 3001. Ainsi, la mise à jour consiste en une optimisation de type descente de gradient, telle qu'une méthode de gradient conjugué.

Les étapes de la Fig. 6 sont réitérées jusqu'à atteinte d'un critère d'arrêt prédéfini. Le critère d'arrêt est une diminution du coût inférieure à un seuil prédéfini, ou une atteinte d'un nombre d'itérations maximum prédéfini, ou une atteinte d'un temps d'exécution maximum prédéfini de l'étape 300, ou sur survenue d'un événement externe (par exemple, sur commande d'une unité de contrôle externe).

## Revendications

1. Procédé de génération d'un modèle de représentation de relief à partir d'une pluralité de N paires d'images stéréo (120), chacune des N paires d'images stéréo (120) étant associée à une carte de disparités photogrammétriques (201) qui est obtenue par calcul de corrélation (1315) à partir de la paire d'images stéréo (120) en question, le procédé étant **caractérisé en ce qu'**il comporte les étapes itératives suivantes :

- calcul (3002) de cartes de disparités géométriques (3003) à partir d'un modèle de représentation de relief prédéterminé (3001), par projection du modèle de représentation de relief prédéterminé dans une géométrie épipolaire (203) des paires d'images stéréo (120) ;
- calcul (3005) d'une fonction de coût, représentative d'une différence entre les disparités géométriques et photogrammétriques, associée au modèle de représentation de relief prédéterminé (3001) ; et
- mise à jour (3006) du modèle de représentation de relief prédéterminé (3001) par optimisation de type descente de gradient de la fonction de coût, et réitération jusqu'à atteinte d'un critère d'arrêt prédéfini.

2. Procédé selon la revendication 1, dans lequel la fonction de coût *FC* est exprimée ainsi :

$$FC = \sum_{k} \sum_{(i,j)} W_{k,0}(i,j) N_m(D_k(i,j) - D_{k,0}(i,j))$$

où *k* est un indice de parcours des N paires d'images stéréo (120), $N_m$ est une fonction de normalisation, $D_k(i,j)$ est la valeur de disparité pour le pixel *(i,j)* dans la carte de disparités géométriques (3003) associée à la paire d'images stéréo (120) pointée par la valeur de l'indice *k,* et $D_{k,0}(i,j)$ est la valeur de disparité pour le pixel *(i,j)* dans la carte de disparités photogrammétriques (201) associée à la paire d'images stéréo (120) pointée par la valeur de l'indice *k,* et $W_{k,0}(i,j)$ est la valeur correspondante pour le pixel *(i,j)* dans une carte de scores de corrélation (202) associée, à l'issue du calcul de corrélation (1315), à ladite carte de disparités photogrammétriques (201) associée à la paire d'images stéréo (120) pointée par la valeur de l'indice *k*.

3. Procédé selon la revendication 2, dans lequel la fonction de normalisation $N_m$ est la pseudo-norme de Huber ainsi appliquée :

$$N_m(x) = \begin{cases} |x| - \dfrac{1}{2} , |x| \geq 1 \\ \dfrac{x^2}{2}, |x| < 1 \end{cases}$$

4. Procédé selon la revendication 2 ou 3, dans lequel la fonction de coût FC est ajustée avec un terme R de régularisation du modèle de représentation de relief, de telle sorte que :

$$FCA = \lambda . R + FC = \lambda . R + \sum_{k} \sum_{(i,j)} W_{k,0}(i,j) N_m(D_k(i,j) - D_{k,0}(i,j))$$

où $\lambda$ est un facteur de pondération de régularisation du modèle de représentation de relief et *FCA* est la fonction de coût ajustée.

5. Procédé selon la revendication 4, dans lequel le terme *R* de régularisation du modèle de représentation de relief (3001) est la variation totale du modèle de représentation de relief (3001), ou sa variante Huber-TV, laquelle est normalisée par un pas de grille du modèle de représentation de relief (3001).

6. Procédé selon l'une quelconque des revendications 1 à 5, dans lequel la projection du modèle de représentation de relief prédéterminé (3001) dans la géométrie épipolaire (203) des paires d'images stéréo (120), appelée ici géométrie épipolaire initiale, est effectuée dans une géométrie épipolaire sur-échantillonnée, et le résultat de la projection est ensuite sous-échantillonné dans la géométrie épipolaire initiale.

7. Procédé selon la revendication 6, dans lequel le résultat de la projection est sous-échantillonné dans la géométrie épipolaire initiale à l'aide d'un noyau de convolution bilinéaire réalisant un filtrage passe-bas.

8. Procédé selon l'une quelconque des revendications 1 à 7, dans lequel le modèle de représentation de relief (3001) est un modèle numérique d'élévation.

9. Produit programme d'ordinateur comportant des instructions pour implémenter le procédé selon l'une quelconque des revendications 1 à 8, lorsque lesdites instructions sont exécutées par un processeur.

10. Support de stockage d'informations stockant un programme d'ordinateur comportant des instructions pour implémenter le procédé selon l'une quelconque des revendications 1 à 8, lorsque lesdites instructions sont lues depuis le support de stockage d'informations et exécutées par un processeur.

11. Système de génération d'un modèle de représentation de relief à partir d'une pluralité de N paires d'images stéréo (120), chacune des N paires d'images stéréo (120) étant associée à une carte de disparités photogrammétriques (201) qui est obtenue par calcul de corrélation (1315) à partir de la paire d'images stéréo (120) en question, le système comportant de la circuiterie électronique configurée pour implémenter les étapes itératives suivantes :

- calcul (3002) de cartes de disparités géométriques (3003) à partir d'un modèle de représentation de relief prédéterminé (3001), par projection du modèle de représentation de relief prédéterminé (3001) dans une géométrie épipolaire (203) des paires d'images stéréo (120) ;
- calcul (3005) d'une fonction de coût, représentative d'une différence entre les disparités géométriques et photogrammétriques, associée au modèle de représentation de relief prédéterminé (3001) ; et
- mise à jour (3006) du modèle de représentation de relief prédéterminé (3001) par optimisation de type descente de gradient de la fonction de coût, et réitération jusqu'à atteinte d'un critère d'arrêt prédéfini.

**Patentansprüche**

1. Verfahren zur Erzeugung eines Reliefdarstellungsmodells ausgehend von einer Mehrzahl von N Stereobildpaaren (120), wobei jedes der N Stereobildpaare (120) einer Karte mit photogrammetrischen Disparitäten (201) zugeordnet ist, die durch Korrelationsberechnung (1315) ausgehend von dem betreffenden Stereobildpaar (120) erhalten wird, wobei das Verfahren **dadurch gekennzeichnet ist, dass** es die folgenden iterativen Schritte umfasst:

- Berechnen (3002) von Karten mit geometrischen Disparitäten (3003) ausgehend von einem vorbestimmten Reliefdarstellungsmodell (3001) durch Projektion des vorbestimmten Reliefdarstellungsmodells in eine Epipolargeometrie (203) der Stereobildpaare (120);
- Berechnen (3005) einer für eine Differenz zwischen den geometrischen und photogrammetrischen Disparitäten repräsentativen Kostenfunktion, die dem vorbestimmten Reliefdarstellungsmodell (3001) zugeordnet ist; und
- Aktualisieren (3006) des vorbestimmten Reliefdarstellungsmodells (3001) durch Optimierung vom Typ Gradientenabstieg der Kostenfunktion und Wiederholung bis zum Erreichen eines vorgegebenen Stoppkriteriums.

2. Verfahren nach Anspruch 1, wobei die Kostenfunktion FC folgendermaßen ausgedrückt wird:

$$FC = \sum_{k} \sum_{(i,j)} W_{k,0}(i,j) N_m(D_k(i,j) - D_{k,0}(i,j))$$

wobei $k$ ein Laufindex der N Stereobildpaare (120) ist, $N_m$ eine Normalisierungsfunktion ist, $D_k(i,j)$ der Disparitätswert für das Pixel $(i,j)$ in der Karte mit geometrischen Disparitäten (3003) ist, die dem Stereobildpaar (120) zugeordnet ist, auf das durch den Wert des Index $k$ gezeigt wird, und $D_{k,0}(i,j)$ der Disparitätswert für das Pixel $(ij)$ in der Karte mit photogrammetrischen Disparitäten (201) ist, die dem Stereobildpaar (120) zugeordnet ist, auf das durch den Wert des Index $k$ gezeigt wird, und $W_{k,0}(i,j)$ der entsprechende Wert für das Pixel $(i,j)$ in einer Karte mit Korrelationsscores (202) ist, die, nach der Korrelationsberechnung (1315), der Karte mit photogrammetrischen Disparitäten (201) zugeordnet ist, die dem Stereobildpaar (120) zugeordnet ist, auf das durch den Wert des Index $k$ gezeigt wird.

3. Verfahren nach Anspruch 2, wobei die Normalisierungsfunktion $N_m$ die folgendermaßen angewandte Pseudo-Huber-Norm ist:

$$N_m(x) = \begin{cases} |x| - \dfrac{1}{2}, & |x| \geq 1 \\[2mm] \dfrac{x^2}{2}, & |x| < 1 \end{cases}$$

**4.** Verfahren nach Anspruch 2 oder 3, wobei die Kostenfunktion FC mit einem Term $R$ zur Regularisierung des Reliefdarstellungsmodells angepasst wird, so dass:

$$FCA = \lambda.R + FC = \lambda.R + \sum_k \sum_{(i,j)} W_{k,0}(i,j)N_m(D_k(i,j) - D_{k,0}(i,j))$$

wobei $\lambda$ ein Gewichtungsfaktor zur Regularisierung des Reliefdarstellungsmodells ist und *FCA* die angepasste Kostenfunktion ist.

**5.** Verfahren nach Anspruch 4, wobei der Term $R$ zur Regularisierung des Reliefdarstellungsmodells (3001) die Gesamtvariation des Reliefdarstellungsmodells (3001) oder seine Huber-TV-Variante ist, die durch ein Rastermaß des Reliefdarstellungsmodells (3001) normalisiert wird.

**6.** Verfahren nach einem der Ansprüche 1 bis 5, wobei die Projektion des vorbestimmten Reliefdarstellungsmodells (3001) in die Epipolargeometrie (203) der Stereobildpaare (120), hier anfängliche Epipolargeometrie genannt, in einer aufwärts abgetasteten Epipolargeometrie durchgeführt wird und das Ergebnis der Projektion anschließend in der anfänglichen Epipolargeometrie abwärts abgetastet wird.

**7.** Verfahren nach Anspruch 6, wobei das Ergebnis der Projektion in der anfänglichen Epipolargeometrie mithilfe eines bilinearen Konvolutionskerns abwärts abgetastet wird, wobei eine Tiefpassfilterung ausgeführt wird.

**8.** Verfahren nach einem der Ansprüche 1 bis 7, wobei das Reliefdarstellungsmodell (3001) ein digitales Höhenmodell ist.

**9.** Computerprogrammprodukt, das Anweisungen umfasst, die bei der Ausführung der Anweisungen durch einen Prozessor das Verfahren nach einem der Ansprüche 1 bis 8 implementieren.

**10.** Informationsspeichermedium, das ein Computerprogramm speichert, das Anweisungen umfasst, die beim Lesen der Anweisungen von dem Informationsspeichermedium und Ausführen durch einen Prozessor das Verfahren nach einem der Ansprüche 1 bis 8 implementieren.

**11.** System zur Erzeugung eines Reliefdarstellungsmodells ausgehend von einer Mehrzahl von N Stereobildpaaren (120), wobei jedes der N Stereobildpaare (120) einer Karte mit photogrammetrischen Disparitäten (201) zugeordnet ist, die durch Korrelationsberechnung (1315) ausgehend von dem betreffenden Stereobildpaar (120) erhalten wird, wobei das System eine elektronische Schaltungsanordnung umfasst, die dazu ausgestaltet ist, die folgenden iterativen Schritte zu implementieren:

- Berechnen (3002) von Karten mit geometrischen Disparitäten (3003) ausgehend von einem vorbestimmten Reliefdarstellungsmodell (3001) durch Projektion des vorbestimmten Reliefdarstellungsmodells (3001) in eine Epipolargeometrie (203) der Stereobildpaare (120);
- Berechnen (3005) einer für eine Differenz zwischen den geometrischen und photogrammetrischen Disparitäten repräsentativen Kostenfunktion, die dem vorbestimmten Reliefdarstellungsmodell (3001) zugeordnet ist; und
- Aktualisieren (3006) des vorbestimmten Reliefdarstellungsmodells (3001) durch Optimierung vom Typ Gradientenabstieg der Kostenfunktion und Wiederholung bis zum Erreichen eines vorgegebenen Stoppkriteriums.

**Claims**

**1.** Method for generating a relief representation model using a plurality of N pairs of stereo images (120), each of the N pairs of stereo images (120) being associated with a map of photogrammetric disparities (201) which is obtained by correlation calculation (1315) based on the pair of stereo images (120) in question, the method being **characterized in that** it comprises the following iterative steps:

- calculation (3002) of maps of geometric disparities (3003) based on a predetermined relief representation model (3001), by projection of the predetermined relief representation model into an epipolar geometry (2003) of the pairs of stereo images (120);
- calculation (3005) of a cost function, representative of a difference between the geometric and photogrammetric disparities, associated with the predetermined relief representation model (3001); and
- updating (3006) of the predetermined relief representation model (3001) by optimization of the gradient descent type of the cost function, and iteration until a predefined endpoint criterion is reached.

2. Method according to Claim 1, in which the cost function CF is expressed thus:

$$FC = \sum_{k} \sum_{(i,j)} W_{k,0}(i,j) N_m(D_k(i,j) - D_{k,0}(i,j))$$

where $k$ is a running index of the N pairs of stereo images (120), $N_m$ is a normalization function, $D_k(i,j)$ is the disparity value for the pixel $(i,j)$ in the map of geometric disparities (3003) associated with the pair of stereo images (120) pointed to by the value of the index $k$, and $D_{k,0}(i,j)$ is the disparity value for the pixel $(i,j)$ in the map of photogrammetric disparities (201) associated with the pair of stereo images (120) pointed to by the value of the index $k$, and $W_{k,0}(i,j)$ is the corresponding value for the pixel $(i,j)$ in an associated map of correlation scores (202), following the calculation of correlation (1315) with the said map of photogrammetric disparities (201) associated with the pair of stereo images (120) pointed to by the value of the index $k$.

3. Method according to Claim 2, in which the normalization function $N_m$ is the Huber pseudo-norm applied thus:

$$N_m(x) = \begin{cases} |x| - \dfrac{1}{2}, & |x| \geq 1 \\ \dfrac{x^2}{2}, & |x| < 1 \end{cases}$$

4. Method according to either of Claims 2 or 3, in which the cost function CF is adjusted with a term R for regularization of the relief representation model, in such a manner that:

$$ACF = \lambda.R + CF = \lambda.R + \sum_{k} \sum_{(i,j)} W_{k,0}(i,j) N_m(D_k(i,j) - D_{k,0}(i,j))$$

where $\lambda$ is a weighting factor for regularization of the relief representation model and $ACF$ is the adjusted cost function.

5. Method according to Claim 4, in which the term $R$ for regularization of the relief representation model (3001) is the total variation of the relief representation model (3001), or its Huber-TV variant, which is normalized by a grid pitch of the relief representation model (3001).

6. Method according to any one of Claims 1 to 5, in which the projection of the predetermined relief representation model (3001) into the epipolar geometry (203) of the pairs of stereo images (120), here referred to as initial epipolar geometry, is carried out in an over-sampled epipolar geometry, and the result of the projection is subsequently under-sampled in the initial epipolar geometry.

7. Method according to Claim 6, in which the result of the projection is under-sampled in the initial epipolar geometry by means of a bilinear convolution kernel implementing a low-pass filtering.

8. Method according to any one of Claims 1 to 7, in which the relief representation model (3001) is a digital elevation model.

9. Computer programme product comprising instructions for implementing the method according to any one of Claims 1 to 8, when the said instructions are executed by a processor.

10. Information storage medium storing a computer programme comprising instructions for implementing the method according to any one of Claims 1 to 8, when the said instructions are read from the information storage medium and executed by a processor.

11. System for generating a relief representation model using a plurality of N pairs of stereo images (120), each of the N pairs of stereo images (120) being associated with a map of photogrammetric disparities (201) which is obtained by correlation calculation (1315) based on the pair of stereo images (120) in question, the system comprising electronic circuitry configured for implementing the following iterative steps:

- calculation (3002) of maps of geometric disparities (3003) based on a predetermined relief representation model, by projection of the predetermined relief representation model (3001) into an epipolar geometry (203) of the pairs of stereo images (120);
- calculation (3005) of a cost function, representative of a difference between the geometric and photogrammetric disparities, associated with the predetermined relief representation model (3001); and
- updating (3006) of the predetermined relief representation model (3001) by optimization of the gradient descent type of the cost function, and iteration until a predefined endpoint criterion is reached.

Obtention de paires d'images stéréo — 110

... N paires — 120

Calcul de corrélation 1

Calcul de corrélation 2

...

Calcul de corrélation N — 131

Conversion 1

Conversion 2

...

Conversion N — 132

130

Génération d'un modèle de représentation du relief par fusion — 140

**Fig. 1**

201

Carte de
disparités
photogram
-métriques

202

Carte de
scores de
corrélation

203

Géométrie
épipolaire
des images
stéréo

Triangulation
3D

1321

Réseau de
points 3D

1322

132

1323

Conversion en
modèle de
representation
de relief

Modèle
unitaire
fourni

205

Carte de
qualité

206

**Fig. 2**

Obtention de paires d'images stéréo — 110

N paires — 120

Calcul de corrélation 1    Calcul de corrélation 2    ...    Calcul de corrélation N — 131

Génération d'un modèle de représentation du relief par itérations — 300

**Fig. 3**

CPU **401**    RAM **402**    ROM **403**

410

**400**    HDD **404**    COM **405**

**Fig. 4**

**Fig. 5**

120 — Paire d'images stéréo

204 — Modèle géométrique des images

Modélisation épipolaire — 1311

131

Transformations épipolaires — 1312

Rectification épipolaire — 1313

Images épipolaires — 1314

Corrélation stéréo — 1315

201 — Carte de disparités photogram-métriques

Carte de scores de corrélation — 202

203 — Géométrie épipolaire des images stéréo

202 — Cartes de scores de corrélation

201 — Cartes de disparités photogram -métriques

203 — Géométrie épipolaire des paires d'images stéréo

300

Calcul de disparités — 3002

3001 — Modèle de représentation de relief en cours d'optimisation

3004 — Comparaison des disparités

Cartes de disparités géométriques — 3003

3005 — Calcul de fonction de coût

Mise à jour de modèle

3006

600 — Modèle fourni

**Fig. 6**